# FASCICULE DE BREVET EUROPEEN

(11) **EP 1 516 487 B1**
(45) Date de publication et mention de la délivrance du brevet: **18.10.2006**
(21) Numéro de dépôt: 03748177.7
(22) Date de dépôt: 18.06.2003
(51) Int. Cl.: H04N 7/14

(54) **SYSTEME AUDIOVISUEL POUR L'ETABLISSEMENT D'UNE COMMUNICATION BIDIRECTIONNELLE ENTRE UNE PREMIERE SCENE ET UNE DEUXIEME SCENE**
AUDIOVISUELLES SYSTEM FUER DIE ANLAGE EINER BIDIREKTIONELLEN UEBERTRAGUNG ZWISCHEN EINER ERSTEN SZENE UND EINER ZWEITEN
AUDIO-VISUAL SYSTEM FOR SETTING UP TWO-WAY COMMUNICATION BETWEEN A FIRST SCENE AND A SECOND SCENE

(30) Priorité: 25.06.2002 FR 0207881
(43) Date de publication de la demande: 23.03.2005
(73) Titulaire: FRANCE TELECOM, 75015 Paris (FR)
(72) Inventeur: BUCHNER, Georges, F-75012 Paris (FR); GACHIGNARD, Olivier, F-92120 Montrouge (FR)
(74) Mandataire: Loisel, Bertrand
(86) Numéro de dépôt international: PCT/FR2003/001846
(87) Numéro de publication internationale: WO 2004/002152

(56) Documents cités:
- WO-A-01/11880
- WO-A-02/15567
- WO-A-02/23902
- DE-U- 9 208 670

## Description

L'invention concerne un système audiovisuel de transmission bidirectionnelle de données entre deux scènes locales distantes l'une de l'autre.

Une application particulière de ce type de système se situe dans le domaine de la téléconférence et de la visioconférence et, en particulier, dans le domaine de la téléprésence, qui permet de mettre en présence une scène locale et une scène distante et qui, en raison de la qualité de dispositifs de prise de vues et de sons et de dispositif de restitution d'images et de sons utilisés, crée un sentiment de présence réciproque, de réalisme entre groupes de personnes en communication.

Les systèmes de téléprésence, en particulier de visioconférence, sont souvent installés dans des salles spécifiques distantes l'une de l'autre, chaque salle étant équipée de moyens de prise de vues, de moyens de prise de sons, de moyens de restitution d'images et de moyens de restitution de sons, de manière à établir une télécommunication bidirectionnelle entre ces dernières.

Des systèmes audiovisuels de transmission de données peuvent également être hébergés au sein de systèmes interactifs audiovisuels tels que des visiophones, des ordinateurs personnels (PC de type multimédias), des bornes interactives, ...

Ainsi, dans le cadre de la présente description, par système audiovisuel, on entend tout type d'appareil ou système capable d'établir une communication bidirectionnelle entre deux scènes distantes.

Comme indiqué précédemment, en raison de la qualité audiovisuelle des systèmes de téléprésence, les utilisateurs de ces systèmes ont le sentiment d'être situés au voisinage immédiat d'une personne ou d'un groupe de personnes avec lesquelles ils conversent.

Cependant, ces systèmes ne permettent pas de réaliser une transmission de données d'une scène locale vers une scène distante.

Ce problème se pose de façon accrue lorsque les utilisateurs sont pourvus d'ordinateurs portables dotés d'une liaison aérienne, telle qu'une liaison infrarouge (« IrDa») ou par ondes radio, lesquelles permettent des transferts de données entre des ordinateurs situés à une distance compatible avec la portée de la liaison.

Ainsi, comme on le conçoit, le sentiment de téléprésence procuré par les dispositifs audiovisuels dont sont équipés les systèmes de téléprésence est limité dès lors que l'on souhaite transférer des données entre les deux scènes.

Ce problème de l'absence de transmission de données autres que des données d'image et de sons se pose de manière généralement dans tous types de système audiovisuels de transmission de données.

Le but de l'invention est donc de pallier cet inconvénient.

Ainsi, selon l'invention, il est proposé un système audiovisuel pour l'établissement d'une télécommunication bidirectionnelle entre une première scène et une deuxième scène distantes l'une de l'autre, comprenant des installations audiovisuelles complémentaires équipant respectivement lesdites scènes et comportant chacune un ensemble d'au moins un module de télécommunications comprenant chacun des moyens de prises de vues, des moyens de prises de sons, des moyens de restitution d'images et des moyens de restitution de sons, lesdites installations étant raccordées entre elles par un réseau de transmission de données pour la transmission de données entre lesdits modules.

Selon une caractéristique générale de ce système, chaque installation audiovisuelle est en outre équipée d'au moins une borne de transmission de données apte à communiquer avec un appareil portatif d'un utilisateur du système et raccordée à une unité de traitement connectée au réseau de transmission de données pour la transmission de données reçues par la borne vers une borne correspondante de l'installation distante.

Il est ainsi possible de transférer entre les deux scènes des données autres que des données d'images et de sons, ce qui augmente encore la capacité du système audiovisuel.

Selon un mode de réalisation de ce système, la borne de transmission de données comporte une fiche pour le raccordement mécanique d'une fiche complémentaire de l'appareil portatif.

En variante, la borne de transmission de données est une borne apte à communiquer avec l'ordinateur de poche par une liaison sans fil.

Dans ce cas, la borne comporte par exemple une diode réceptrice disposée au foyer d'une parabole ou d'un miroir concave.

Selon une autre caractéristique de ce système, il comporte plusieurs bornes de transmission de données associées chacune à une parabole ou à un miroir concave et connectées à un multiplexeur (48) raccordé à l'unité de traitement.

Selon une autre caractéristique de ce système, selon un mode de réalisation particulier, chaque borne est associée à au moins un miroir adapté pour réfléchir les ondes reçues en provenance de l'appareil vers la borne.

Dans ce cas, par exemple, le miroir est un miroir semi-transparent disposé sur la scène, devant les moyens de restitution d'image.

L'appareil (P) de l'utilisateur peut être un ordinateur portatif.

Selon une autre caractéristique du système selon l'invention, chaque module est équipé d'une borne de transmission.

On peut également doter l'unité de traitement connectée au réseau de transmission de données pour la transmission de données reçues par la borne vers une borne correspondante de l'installation distante de moyens pour réaliser une détection de la borne émettrice.

D'autres buts, caractéristiques et avantages de l'invention apparaîtront à la lecture de la description qui va suivre, donnée uniquement à titre d'exemple non limitatif, et faite en référence aux dessins annexés, sur lesquels :
- la figure 1 est un schéma général illustrant la structure d'un système audiovisuel conforme à l'invention ;
- la figure 2 montre un exemple de réalisation d'une borne de transmission du système de la figure 1 ; et
- la figure 3 illustre un autre exemple de réalisation d'une borne de transmission d'un système audiovisuel conforme à l'invention.

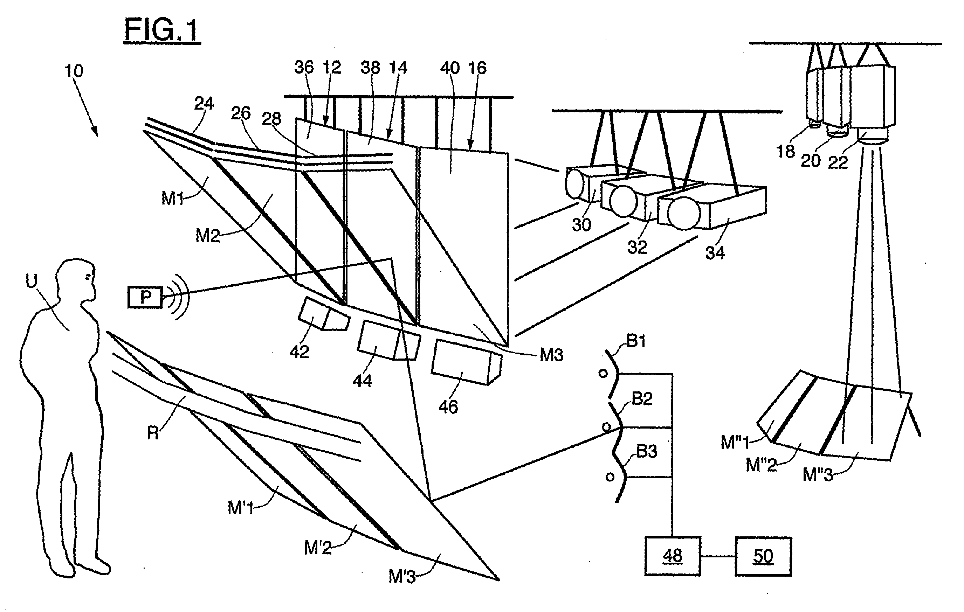

Sur la figure 1, on a représenté la structure générale d'un système audiovisuel conforme à l'invention. Comme on le voit sur cette figure, ce système comporte essentiellement un installation 10 audiovisuelle placée dans une salle locale et destinée à coopérer avec une installation complémentaire (non représentée) placée dans une salle distante.

Comme on le voit sur la figure 1, l'installation 10 a une structure modulaire et est pourvue d'un ensemble de dispositifs audiovisuels juxtaposés.

Dans l'exemple de réalisation représenté, cette installation comporte trois modules audiovisuels 12, 14 et 16. Bien entendu, le nombre de tels modules peut être adapté en fonction des dimensions de la salle dans laquelle l'installation est installée.

Chaque module audiovisuel 12, 14 et 16 comprend un dispositif de prises de vues et un dispositif de prises de sons de la scène locale. Il comporte également un dispositif de restitution d'images et un dispositif de restitution de sons de la scène distante.

De façon pratique, les moyens de prises de vues des modules comportent trois caméras 18, 20 et 22, et les moyens de prises de sons comprennent trois antennes acoustiques ou microphones 24, 26 et 28.

En ce qui concerne les moyens de restitution d'images, ceux-ci comportent un ensemble de vidéo-projecteurs 30, 32 et 34, associés chacun à un écran 36, 38 et 40. Les moyens de restitution de son comprennent, quant à eux, des hauts-parleurs 42, 44 et 46.

Dans l'exemple de réalisation représenté sur la figure 1, pour procéder à la prise de vues, l'installation 10 est pourvue d'un ensemble de miroirs M1, M2, M3 ; M'1, M'2, M'3 ; et M"1, M"2, M"3, aptes à diriger les rayons lumineux issus d'un utilisateur U vers les caméras 18, 20.et 22. Il est ainsi possible de décaler ces caméras en-dehors de la scène locale, les rendant invisibles pour l'utilisateur U, augmentant le sentiment de réalisme.

En effet, dans ce cas, les premiers miroirs M1, M2 et M3 sont disposés devant les écrans 36, 38 et 40, dans l'axe optique des vidéo-projecteurs 30, 32 et 34, et sont réalisés en un matériau semi-transparent, de manière à réfléchir les rayons lumineux issus de l'utilisateur mais à laisser passer les rayons lumineux issus de l'écran.

Comme on le conçoit, cet agencement permet de prendre des vues de l'utilisateur U dans le même axe que celui selon lequel les images de l'utilisateur distant sont projetées sur les écrans 36, 38 et 40, ce qui permet d'éviter que le contact des regards ne soit pas restitué et donc d'éviter les phénomènes dits de parallaxe (« eye contact », « parallax effect » ou « eye gaze » en anglais) encore parfois dénommés « effet d'absence de contact des regards ».

Ainsi, chaque module audiovisuel 12, 14 et 16 est pourvu d'une caméra 18, 20 ou 22, d'antennes acoustiques 24, 26 ou 28, d'un video-projecteur 30, 32 ou 34 associé à un écran 36, 38 ou 40, et un haut-parleur 42, 44 ou 46.

Enfin, une rambarde R permet de positionner les utilisateurs par rapport à l'installation, afin d'éviter que ceux-ci ne se rapprochent trop des écrans 36, 38 et 40 et des premiers miroirs M1, M2 et M3, ce qui serait également susceptible d'entraîner un effet de parallaxe en raison de l'augmentation nécessaire de l'angle de prise de vues, comme cela est connu en soi.

Enfin, pour la transmission de données numériques autres que des données d'image et de son, l'installation est pourvue de bornes de transmission de données B1, B2 et B3, équipant chacune un module 12, 14 et 16, et destinées chacune à récupérer des ondes aériennes émises en provenance d'un appareil ou poste portatif P de l'utilisateur U.

Dans l'exemple de réalisation représenté, ces bornes sont adaptées pour recevoir des ondes aériennes en provenance du poste P. Bien entendu, en variante, ces bornes peuvent être agencées sous la forme de fiches complémentaires de celles du poste P, par exemple montées sur la rambarde R, pour le raccordement mécanique du poste P et donc le transfert direct de données entre le poste et les bornes.

Cependant, dans le cas où la liaison entre le poste et les bornes s'effectue par ondes aériennes, cette liaison peut s'effectuer soit par ondes infrarouges ou IrDA, soit par ondes radio, par exemple selon le standard « Bluetooth » ou la norme « 802.11 ».

Selon un exemple de réalisation, les bornes B1, B2 et B3 sont raccordées à un multiplexeur 48, lui-même connecté à un ordinateur 50 par l'intermédiaire d'une interface appropriée, par exemple une carte infrarouge, dans le cas où la liaison entre le poste et l'antenne est une liaison IrDA. L'ordinateur 50 est raccordé à un réseau informatique, par exemple le réseau Internet, et héberge un logiciel de traitement de l'information, par exemple un logiciel de courrier électronique, approprié pour transférer les données reçues en provenance des bornes B1, B2 et B3 vers l'ordinateur de l'installation distante par l'intermédiaire du réseau informatique. Par exemple, cet ordinateur 50 se charge également de la transmission des données d'images et de sons reçues en provenance des moyens de prises de vues et des moyens de prises de sons.

Par ailleurs, l'ordinateur 50 incorpore en outre, stocké en mémoire, un programme de discriminations permettant, par exemple par décodage d'un signal spécifique véhiculé par les signaux émis par chacune des antennes, d'identifier la borne en provenance de laquelle sont transmises les données, l'ordinateur distant se chargeant également de décoder les données incidentes pour les envoyer vers l'antenne correspondante.

Bien entendu, en variante, on pourrait associer à chaque antenne B1, B2 et B3 un ordinateur spécifique pour la réception, le traitement et la transmission des données vers la borne correspondante. Dans ce cas, il n'est plus nécessaire d'effectuer à la réception une discrimination des bornes, B1, B2 et B3.

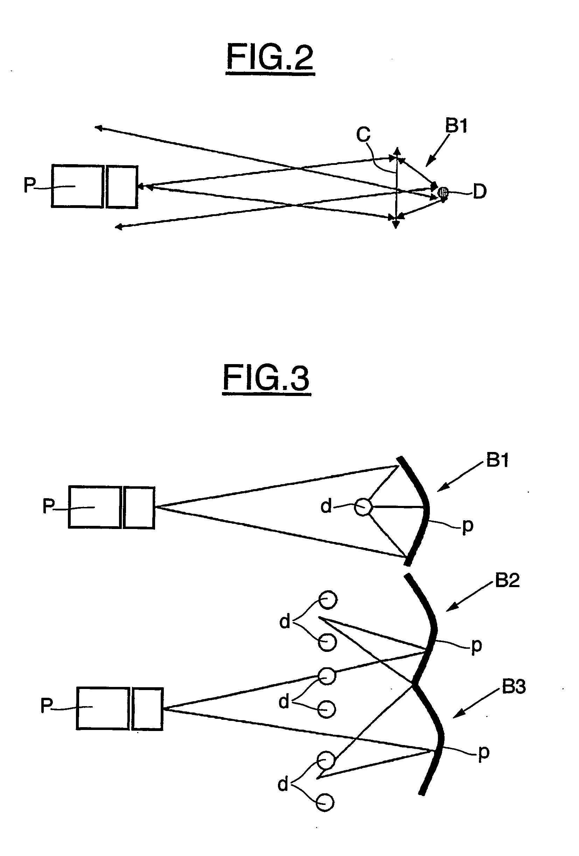

En se référant maintenant à la figure 3, selon un exemple de réalisation, les bornes, telles que la borne B1, peuvent être réalisées au moyen d'un miroir concave C au foyer duquel est disposée une diode réceptrice D. Les signaux issus du poste P sont dès lors traités optiquement de manière qu'ils convergent vers la diode réceptrice. Il est également possible d'agencer les bornes sous la forme d'une parabole p au foyer de laquelle est placée une diode d (figure 3).

Toutefois, selon l'un et l'autre modes de réalisation, il est possible de juxtaposer plusieurs ensembles, par exemple plusieurs antennes; -pour couvrir le champ total de la scène locale, chaque antenne se chargeant de recevoir les signaux émis dans une zone de la scène dans laquelle se situent un ou plusieurs postes P.

Dans ce cas, l'ordinateur 50 incorpore, en mémoire, un logiciel permettant l'analyse de la cohérence des signaux reçus pour en déduire l'emplacement du poste P émetteur, de manière à réémettre, à distance, un flux de données à un emplacement identique. Un tel programme d'analyse de cohérence est un programme à la portée d'un homme du métier.

On notera en outre que l'ordinateur 50 peut, à partir d'une telle analyse de cohérence, déterminer un positionnement correct ou incorrect du poste P par rapport à une borne réceptrice. Dès lors, l'installation peut être pourvue de moyens de signalisation, par exemple sous la forme de diodes, indiquant à l'utilisateur U que son positionnement par rapport aux bornes permet une réception optimale.

Dans l'exemple de réalisation décrit précédemment, chaque module 12, 14 et 16 est pourvu d'une borne de transmission de données. Il est également possible, en variante, et comme indiqué précédemment, de doter chaque installation d'un nombre quelconque de telles bornes réparties le long des écrans, voir une seule borne.

On notera enfin que dans les différents modes de réalisation, les postes utilisables pour la transmission de données vers la scène distante peuvent être constitués par tous type de postes ou appareil susceptibles de transférer des données, tels qu'un ordinateur, un assistant personnel ou « PDA », voire des télécommandes pour le pilotage d'appareils situés dans la scène distante à partir de la scène locale.

## Revendications

1. Système audiovisuel de téléprésence pour l'établissement d'une télécommunication bidirectionnelle entre une première scène et une deuxième scène distantes l'une de l'autre, comprenant des installations audiovisuelles (10) complémentaires équipant respectivement lesdites scènes et comportant chacune :
un ensemble d'au moins un module de télécommunications (12, 14, 16) comprenant chacun des moyens de prise de vues (18, 20, 22), des moyens de prise de sons (24, 26, 28), des moyens de restitution d'images (30, 32, 34, 36, 38, 40) et des moyens de restitution de sons (42, 44, 46),
lesdites installations étant raccordées entre elles par un réseau de transmission de données pour la transmission de données entre lesdits modules,
**caractérisé en ce que**
chaque installation audiovisuelle est en outre équipée d'une pluralité de bornes (B1, B2, B3) de transmission de données aptes à communiquer par une liaison sans fil avec un appareil portatif (P) d'un utilisateur du système et raccordées à une unité de traitement (50), ladite unité de traitement (50) étant pourvue de moyens pour réaliser une détection d'une borne en communication avec l'appareil portatif parmi la pluralité de bornes, et étant connectée au réseau de transmission de données pour la transmission de données reçues par ladite borne en communication vers une borne correspondante de l'installation distante.

2. Système audiovisuel selon la revendication 1, **caractérisé en ce que** la chaque borne comporte une diode réceptrice (d; D) disposée au foyer d'une parabole ou d'un miroir concave.

3. Système audiovisuel selon l'une des revendications 1 et 2, **caractérisé en ce que** les bornes (B1, B2, B3) de transmission de données sont connectées à un multiplexeur (48) raccordé à l'unité de traitement.

4. Système audiovisuel selon l'une quelconque des revendications 1 à 3, **caractérisé en ce que** chaque borne est associée à au moins un miroir (M1, M2, M3, M'1, M'2, M'3, M"1, M"2, M"3) adapté pour réfléchir les ondes reçues en provenance de l'appareil vers la borne.

5. Système audiovisuel selon la revendication 4, **caractérisé en ce que** le miroir (M1, M2, M3) est un miroir semi-transparent disposé sur la scène, devant les moyens de restitution d'image.

6. Système audiovisuel selon l'une quelconque des revendications 1 à 5, **caractérisé en ce que** l'appareil (P) de l'utilisateur est un ordinateur portatif.

7. Système audiovisuel selon l'une quelconque des revendications 1 à 6, **caractérisé en ce que** chaque module est équipé d'une borne de transmission.

## Claims

1. Audiovisual telepresence system for setting up a two-way telecommunication between a first scene and a second scene remote from each other, comprising complementary audiovisual installations (10) with which said scenes are respectively equipped, each installation including:
an assembly of at least one telecommunications module (12, 14, 16), each module comprising shooting means (18, 20, 22), sound shot means (24, 26, 28), picture reproduction means (30, 32, 34, 36, 38, 40) and sound reproduction means (42, 44, 46),
said installations being connected together via a data transmission network for the transmission of data between said modules,
**characterized in that**
each audiovisual installation is further equipped with a plurality of data transmission bases (B1, B2, B3) that are capable of communicating via a wireless link with a portable apparatus (P) carried by a user of the system and are connected to a processing unit (50), said processing unit (50) being provided with means for detecting a base in communication with the portable apparatus from among the plurality of bases and being connected to the data transmission network for transmitting data received by said communicating terminal to a corresponding terminal of the remote installation.

2. Audiovisual system according to Claim 1, **characterized in that** each base includes a receiving diode (d; D) placed at the focus of a dish or of a concave mirror.

3. Audiovisual system according to either of Claims 1 and 2, **characterized in that** the data transmission base (B1, B2, B3) are connected to a multiplexer (48) that is connected to the processing unit.

4. Audiovisual system according to any one of Claims 1 to 3, **characterized in that** each base is associated with at least one mirror (M1, M2, M3, M'1, M'2, M'3, M"1, M"2, M"3) suitable for reflecting the received waves coming from the apparatus to the base.

5. The audiovisual system according to Claim 4, **characterized in that** the mirror (M1, M2, M3) is a semitransparent mirror placed on the scene, in front of the picture reproduction means.

6. Audiovisual system according to any one of Claims 1 to 5, **characterized in that** the user's apparatus (P) is a portable computer.

7. Audiovisual system according to any one of Claims 1 to 6, **characterized in that** each module is equipped with a transmission terminal.

## Patentansprüche

1. Audiovisuelles Telepräsenz-System zum Aufbau einer bidirektionalen Telekommunikation zwischen einer ersten Szene und einer zweiten Szene, die voneinander entfernt sind, mit komplementären audiovisuellen Anlagen (10), die zur Ausrüstung der Szenen gehören und jeweils aufweisen:
eine Einheit von mindestens einem Telekommunikationsmodul (12, 14, 16), die je Bildaufnahmemittel (18, 20, 22), Tonaufnahmemittel (24, 26, 28), Bildwiedergabemittel (30, 32, 34, 36, 38, 40) und Tonwiedergabemittel (42, 44, 46) aufweisen,
wobei die Anlagen miteinander über ein Datenübertragungsnetz zur Datenübertragung zwischen den Modulen verbunden sind,
**dadurch gekennzeichnet, dass**
jede audiovisuelle Anlage außerdem mit mehreren Anschlüssen (B1, B2, B3) zur Datenübertragung ausgestattet ist, die über eine drahtlose Verbindung mit einem tragbaren Gerät (P) eines Benutzers des Systems kommunizieren können und mit einer Verarbeitungseinheit (50) verbunden sind, wobei die Verarbeitungseinheit (50) mit Mitteln versehen ist, um unter den mehreren Anschlüssen eine Erfassung eines mit dem tragbaren Gerät in Verbindung stehenden Anschlusses durchzuführen, und mit dem Datenübertragungsnetz zur Übertragung von von dem verbundenen Anschluss empfangenen Daten zu einem entsprechenden Anschluss der fernen Anlage verbunden ist.

2. Audiovisuelles System nach Anspruch 1, **dadurch gekennzeichnet, dass** jeder Anschluss eine Empfangsdiode (d; D) aufweist, die im Brennpunkt einer Satellitenschüssel oder eines konkaven Spiegels angeordnet ist.

3. Audiovisuelles System nach einem der Ansprüche 1 und 2, **dadurch gekennzeichnet, dass** die Anschlüsse (B1, B2, B3) zur Datenübertragung mit einem Multiplexer (48) verbunden sind, der an die Verarbeitungseinheit angeschlossen ist.

4. Audiovisuelles System nach einem der Ansprüche 1 bis 3, **dadurch gekennzeichnet, dass** jeder Anschluss mindestens einem Spiegel (M1, M2, M3, M'1, M'2, M'3, M"1, M"2, M"3) zugeordnet ist, der ausgelegt ist, um die vom Gerät kommenden Wellen zum Anschluss zu reflektieren.

5. Audiovisuelles System nach Anspruch 4, **dadurch gekennzeichnet, dass** der Spiegel (M1, M2, M3) ein halbtransparenter Spiegel ist, der in der Szene vor den Bildwiedergabemitteln angeordnet ist.

6. Audiovisuelles System nach einem der Ansprüche 1 bis 5, **dadurch gekennzeichnet, dass** das Gerät (P) des Benutzers ein tragbarer Computer ist.

7. Audiovisuelles System nach einem der Ansprüche 1 bis 6, **dadurch gekennzeichnet, dass** jedes Modul mit einem Übertragungsanschluss ausgestattet ist.
